# EUROPÄISCHE PATENTSCHRIFT

(11) **EP 2 562 103 B1**
(45) Veröffentlichungstag und Bekanntmachung des Hinweises auf die Patenterteilung: **23.07.2014**
(21) Anmeldenummer: 12181922.1
(22) Anmeldetag: 27.08.2012
(51) Int. Cl.: B65G 47/84

(54) **Kompaktes Dosentransfersystem**
Compact tin transfer system
Système compact de transfert de conserves

(30) Priorität: 25.08.2011 DE 102011081590
(43) Veröffentlichungstag der Anmeldung: 27.02.2013
(73) Patentinhaber: Mall + Herlan GMBH, 76327 Pfinztal (DE)
(72) Erfinder: Goeb, Claude, 20150 Pattaya (TH)
(74) Vertreter: Eisenführ Speiser

(56) Entgegenhaltungen:
- WO-A2-01/44084
- DE-A1- 19 654 350
- DE-C1- 4 314 142
- FR-A1- 2 515 153
- FR-A1- 2 660 295
- US-A- 5 232 717

## Beschreibung

Die Erfindung betrifft eine Transfervorrichtung mit einem Dornrad und einem Transferrad, die jeweils um zueinander parallele Rotationsachsen drehend angetrieben sind, um Objekte von einer Transporteinrichtung über das Transferrad an Halterungen an dem Dornrad übergeben zu können, oder umgekehrt, vom Dornrad über das Transferrad zu einer Transporteinrichtung.

Die zu transferierenden Objekte sind z.B. Dosen oder andere zylindrische Hohlkörper mit Boden.

Bekannt sind solche Transfervorrichtungen, deren Dornrad und Transferrad benachbart zueinander angeordnet sind und im Bereich ihrer Peripherie Aufnahmedorne bzw. Halterungen für zu bedruckende oder anderweitig zu bearbeitende Objekte aufweisen, wobei jeweils die Aufnahmedorne mit dem Dornrad und die Halterungen mit dem Transferrad verbunden sind, und der Abstand Aufnahmedorne von der Rotationsachse des Dornrades zwischen einem Mindestabstand und einem Maximalabstand veränderlich ist.

Im Zuge ihrer Bearbeitung durchlaufen zu bearbeitende Objekte, beispielsweise Aerosoldosen, Aluminiumflaschen oder ähnliche Hohlkörper beziehungsweise Behälter, mehrere Bearbeitungsstationen. Der Transport entlang dieser Bearbeitungsstationen, die unter anderem ein Grundieren, Drucken, Dekorieren oder Überlackieren durchführen, erfolgt über eine Transporteinrichtung. Als Transporteinrichtung kommt üblicherweise ein sich kontinuierlich bewegender Kettenförderer zum Einsatz, der mit seitlich abstehenden, voneinander mit einer festen (Abstands-) Teilung T1 beabstandeten Haltestäben ausgestattet ist, die die Objekte tragen. Erreicht ein Objekt eine Druckstation, muss vom Kettenförderer über ein ersten Transferrad auf ein der Druckstation zugeordnetes, kontinuierlich drehendes Dornrad umgesetzt und nach erfolgtem Druckvorgang vom Dornrad über ein zweites Transferrad auf den Kettenförderer zurückgeführt werden. Eine von der Teilung T1 des Kettenförderers verschiedene, üblicherweise größere Teilung T2 des Dornrades, wird durch den für die Druckstation erforderlichen Abstand der Aufnahmedorne - gemessen in Umfangsrichtung des Dornrades - vorgegeben. Die voneinander verschiedenen Teilungen T1 und T2 bedingen unterschiedliche Fördergeschwindigkeiten der Objekte auf Kettenförderer und Dornrad und müssen demnach beim Umsetzen der Objekte vom Kettenförder auf das Dornrad und/oder vom Dornrad auf den Kettenförderer auf einer Übergabestrecke ausgeglichen werden. Dieser Teilungsausgleich wird dadurch erreicht, dass die Halterungen am Transferrad und die Aufnahmedorne am Dornrad beweglich gelagert sind.

In EP 1 132 207 B1 ist eine Transfervorrichtung mit einem Dornrad und einem Transferrad beschrieben, bei der die Halterungen und die Aufnahmedorne zum Teilungsausgleich jeweils über eine Geradführung am Transferrad beziehungsweise Dornrad befestigt sind. Die Übergabestrecke ist dabei eine Gerade, wobei die Rotationsachsen des Dornrades bzw. Transferrades jeweils den gleichen Normalabstand von der Übergabestrecke aufweisen. Eine gemeinsame Fördergeschwindigkeit auf der Übergabestrecke zwischen Dornrad und Transferrad wird durch deren Antrieb mit gleicher Drehzahl erreicht. Die Anzahl der an Transferrad und Dornrad angebrachten Halterungen bzw. Aufnahmedorne sind somit zwangsläufig gleich.

In DE 43 14 142 C1 ist eine Transfervorrichtung gemäß dem Oberbegriff des Anspruchs 1 offenbart.

Transfervorrichtungen gemäß dem Stand der Technik haben den Nachteil, dass aufgrund der genannten kinematischen und konstruktiven Merkmale (Gerad-Übergabestrecke, gleicher Normalabstand, gleiche Antriebsdrehzahl sowie gleiche Anzahl von Halterungen bzw. Aufnahmedornen) Transferrad und Dornrad ähnlich groß sind. Dadurch ist eine bauliche Kompaktheit der Transfervorrichtung beschränkt.

Der vorliegenden Erfindung liegt die Aufgabe zugrunde, eine alternative Transfervorrichtung zur Verfügung zu stellen, die einen geringeren Raumbedarf hat.

Diese Aufgabe wird durch eine Vorrichtung gelöst, bei der Dornrad und Transferrad jeweils um zueinander parallele Rotationsachsen drehend angetrieben sind und im Bereich ihrer Peripherie jeweils Halterungen für zu bedruckende oder anderweitig zu bearbeitende Objekte aufweisen, wobei der Abstand der Halterungen an dem Dornrad von der Rotationsachse des Dornrades zwischen einem Mindestabstand und einem Maximalabstand veränderlich ist. Dornrad und Transferrad sind derart benachbart zueinander angeordnet, dass Objekte von einer Transporteinrichtung über das Transferrad an jeweils eine Halterung an dem Dornrad übergeben werden können, oder umgekehrt, vom Dornrad über das Transferrad zu einer Transporteinrichtung.

Die Halterungen an dem Transferrad sind jeweils über einen Transferschwenkarm um eine Schwenkachse schwenkbar befestigt, wobei die Schwenkachse parallel zur Rotationsachse des Transferrades verläuft und die Schwenkachse für jede der Halterungen denselben, festen Abstand zu der Rotationsachse hat.

Eine ein Objekt abgebende Halterung an dem Transferrad und ein das Objekt aufnehmende Halterung an dem Dornrad durchlaufen in einem Übergabebereich einen gemeinsamen Bahnkurvenabschnitt. Dieser gemeinsame Bahnkurvenabschnitt beschreibt die Übergabe- bzw. Begleitstrecke. Der gemeinsame Bahnkurvenabschnitt wird bei gleicher Bahngeschwindigkeit durchlaufen.

Der gemeinsam durchlaufende Bahnkurvenabschnitt ist kreisbahnförmig oder angenähert kreisbahnförmig. Bei dieser Ausgestaltung kann das Transferrad nah am Dornrad angeordnet werden. Dies erlaubt einen besonders kompakten Aufbau der Transfereinrichtung.

Die Transfervorrichtung umfasst Steuermittel, die bewirken, dass eine ein abgebende Halterung am Transferrad und eine das Objekt aufnehmende Halterung am Dornrad in einem Übergabebereich einen gemeinsamen Bahnkurvenabschnitt bei gleicher Bahngeschwindigkeit durchlaufen, wobei der Bahnkurvenabschnitt kreisbahnförmig oder angenähert kreisbahnförmig ist.

Die erfindungsgemäße Lösung schließt die Erkenntnis ein, dass eine hauptsächlich tangential bewegliche Befestigung der Halterungen an dem Transferrad eine zur Übergabe von Objekten vom Transferrad zum Dornrad und umgekehrt erforderliche Angleichung der Abstandsteilungen der jeweiligen Halterungen im Übergabebereich mittels tangentialer Ausgleichbewegungen erlaubt. Die hierzu vorgesehenen Schwenkarme stellen eine praktikable - wenn auch nicht die einzige - Möglichkeit dar, solche Ausgleichbewegungen in hauptsächlich tangentialer Richtung zu realisieren und erlauben damit Angleichung der Abstandteilungen durch jeweils momentane Veränderung der Winkelteilung am Transferrad.

Die erfindungsgemäße Lösung hat somit den Vorteil, dass ein Teilungsausgleich auf der Übergabestrecke zwischen Transferrad und Dornrad durch eine TangentialRelativbewegung eines Transferschwenkarmes des Transferrades erzielt werden kann. Damit kann ein Transferrad deutlich kleiner ausgeführt werden als das Dornrad, was zu einem besonders kompakten aufbau der Transfervorrichtung führt.

Die erfindungsgemäße Lösung kann durch weitere vorteilhafte Ausgestaltungen ergänzt werden. Einige solcher Ausgestaltungen sind im Folgenden beschrieben.

So kann ein Maximalabstand der Halterungen von der Rotationsachse des Transferrades kleiner sein, als der Mindestabstand der Aufnahmedorne von der Rotationsachse des Dornrades.

Für eine besonders platzsparende Konstruktion der Transfervorrichtung kann in einer vorteilhaften Ausgestaltung die Anzahl der Halterungen an dem Transferrad kleiner sein, als die Anzahl der Aufnahmedorne an dem Dornrad. Eine kleinere Anzahl von Halterungen am Transferrad führt zu einem geringeren Druckluft- bzw. Vakuumhaushalt.

Im Sinne einer optimalen Raumausnutzung können in einer vorteilhaften Ausgestaltung der erfindungsgemäßen Transfervorrichtung die Schwenkachsen der Transferschwenkarme an dem Transferrad auf einem Kreis um die Rotationsachse des Transferrades gleichmäßig verteilt sein.

In einer vorteilhaften Ausgestaltung sind die Halterungen an dem Dornrad mit diesem Dornrad jeweils über einem Dornschwenkarm verbunden, dessen Schwenkachse parallel zur Rotationsachse des Dornrades verläuft und die für jede der Aufnahmedorne an dem Dornrad denselben, festen Abstand zu dessen Rotationsachse hat, wobei die Dornschwenkarme an dem Dornrad ein Bewegen der an ihnen befestigten Aufnahmedorne zwischen deren Mindestabstand und Maximalabstand zur Rotationsachse entlang einer Kreisführungsbahn bewirken/erlauben und somit eine Bewegung in einer hauptsächlich radialen Richtung.

Aus fertigungstechnischen Gründen kann die Befestigung der Halterungen an dem Dornrad jeweils an einer Geradführung zweckmäßig sein. In einer alternativen Ausgestaltung können die Halterungen an dem Dornrad jeweils an einer Geradführung befestigt sein, dessen Längsachse quer zur Rotationsachse des Dornrades verläuft, wobei die Geradführungen an dem Dornrad ein Bewegen der an ihnen befestigten Halterungen zwischen deren Mindestabstand und Maximalabstand zur Rotationsachse entlang einer Geradführungsbahn bewirken/erlauben.

Um eine besonders robuste Steuerung zu erreichen, kann dem Transferrad eine erste gestellfeste Steuerkurve und den Transferschwenkarmen des Transferrades jeweils ein Steuerkurvenfolger derart zugeordnet sein, dass die gestellfeste Steuerkurve und Steuerkurvenfolger durch die Rotation des Transferrades um seine Rotationsache ein Bewegen der an den Transferschwenkarmen befestigten Halterungen entlang einer um die Rotationsachse geschlossenen Halterungsbahn bewirken.

Ebenso kann dem Dornrad vorteilhafterweise eine zweite gestellfeste Steuerkurve und den Dornschwenkarmen des Dornrades jeweils ein Steuerkurvenfolger derart zugeordnet sein, dass gestellfeste Steuerkurve und Steuerkurvenfolger durch die Rotation des Dornrades um seine Rotationsache ein Bewegen der an den Dornschwenkarmen befestigten Halterungen entlang einer um die Rotationsachse geschlossenen Aufnahmedornbahn bewirken.

In einer vorteilhaften Ausgestaltung können die Halterungen an dem Transferrad und/oder die Halterungen an dem Dornrad ausgebildet sein, ein Objekt mittels Vakuum anzusaugen und/oder mittels Druckluft abzustoßen.

Im Sinne einer kostengünstigen und wartungsarmen Ausführung der Transfervorrichtung können die Halterungen an dem Transferrad jeweils eine Öffnung aufweisen die zur Zufuhr von Druckluft und/oder Vakuum ausgebildet sind. Dem Gedanken folgend, können die Halterungen an dem Dornrad jeweils eine Öffnung aufweisen, die zur Zufuhr von Druckluft und/oder Vakuum ausgebildet sind. Die Öffnung kann als Bohrung oder als eine andere zur Zufuhr von Druckluft und/oder Vakuum geeignete Ausnehmung ausgebildet sein.

In einer besonders vorteilhaften Ausgestaltung kann eine Zufuhr von Druckluft und/oder Vakuum zu den Halterungen an dem Transferrad, über die jeweilige Schwenkachse der Halterung erfolgen. Eine Druckluft/Vakuum-Zufuhr zu den Halterungen an dem Dornrad kann ebenfalls jeweils über deren Schwenkachse beziehungsweise über den Drehpunkt erfolgen. Eine Druckluft/Vakuum-Zufuhr über eine Schwenkachse beziehungsweise über den Drehpunkt einer Halterung an dem Transferrad und/oder einer Halterung an dem Dornrad ist dahingehend vorteilhaft, als keine biegebeanspruchten Schläuche notwendig sind.

In einer weiteren vorteilhaften Ausgestaltung können die Halterungen an dem Transferrad jeweils entlang einer parallel zu ihrer Schwenkachse verlaufenden Achse beweglich gelagert sein. In einer weiteren vorteilhaften Ausgestaltung kann die Transfervorrichtung Schubsteuermittel umfassen, die bewirken, dass die Halterungen an dem Transferrad jeweils entlang einer parallel zu ihrer Schwenkachse verlaufenden Achse ausgelenkt werden. Der Betrag der Auslenkung kann von einem Drehwinkel des Transferrades abhängen. Der minimale Betrag der Auslenkung einer jeweiligen Halterung an dem Transferrad ist im Wesentlichen von Länge des aufgenommenen Objektes entlang seiner Aufnahmeachse abhängig.

In einer alternativen Ausgestaltung kann dem Dornrad eine dritte gestellfeste Steuerkurve und der Geradführung des Dornrades jeweils ein Steuerkurvenfolger derart zugeordnet sein, dass gestellfeste Steuerkurve und Steuerkurvenfolger durch die Rotation des Dornrades um seine Rotationsache ein Bewegen der an der Geradführungs befestigten Halterungen an dem Dornrad entlang einer um die Rotationsachse geschlossenen Bahn bewirken.

In einer besonders vorteilhaften Ausgestaltung kann die Transfervorrichtung zwei Transferräder aufweisen. Das erste Transferrad dient zum Übergeben eines zu bearbeitenden Objektes von einer Transporteinrichtung zu einem Dornrad, wobei das Dornrad einer Bearbeitungsstation zugeordnet ist, das zweite Transferrad zum Übergeben des dann bearbeiteten Objekts von einem Dornrad zurück zu der Transporteinrichtung.

Im Folgenden wird die Erfindung anhand der in den Zeichnungen dargestellten beispielhaften Ausführungsformen erläutert. Die unterschiedlichen Merkmale können, wie auch bei den oben beschriebenen Ausführungsformen, beliebig miteinander kombiniert sein.

Es zeigen:
Fig. 1 eine schematische Darstellung einer beispielhaften Ausführungsform einer erfindungsgemäßen Transfervorrichtung, wobei das Transferrad einen Transferschwenkarm und das Dornrad einen Dornschwenkarm umfasst;
Fig. 2 eine schematische Darstellung der beispielhaften Ausführungsform der erfindungsgemäßen Transfervorrichtung aus Fig. 1 zur Verdeutlichung der kinematischen Zusammenhänge;
Fig. 3 ein Detail der beispielhaften Ausführungsform aus Fig. 2 in Hinblick auf eine teilungsausgleichende Schwenkbewegung des Transferschwenkarms und des Dornschwenkarms;
Fig. 4 eine schematische Darstellung einer beispielhaften Ausführungsform einer erfindungsgemäßen Transfervorrichtung mit zwei Transferrädern;
Fig. 5a bis d verschiedene Momentaufnahmen zur Illustration der Bewegung von Transferhalterungen und Aufnahmedorn im Übergabebereich;
Fig. 6 eine schematische Darstellung einer anderen beispielhaften Ausführungsform einer erfindungsgemäßen Transfervorrichtung, wobei das Transferrad einen Transferschwenkarm und das Dornrad eine Geradführung umfasst;
Fig. 7 ein Detail der beispielhaften Ausführungsform aus Fig. 5 in Hinblick auf eine teilungsausgleichende Schwenkbewegung des Transferschwenkarms und der Gerad-Bewegung der Geradführung;
Fig. 8a bis c verschiedene Momentaufnahmen zur Illustration der Bewegung von Transferhalterungen und Aufnahmedorn im Übergabebereich;
Fig. 9a und b verschiedene Momentaufnahmen zur Illustration der Bewegung von Transferhalterungen und Aufnahmedorn im Übergabebereich einer weiteren alternativen Ausführungsvariante;
Fig. 10 eine schematische Darstellung eines Aufnahmedorns mit einer Öffnung, die zur Zufuhr von Druckluft/Vakuum ausgebildet ist;
Fig. 11 eine schematische Darstellung einer Transporteinrichtung mit einem aufgenommenem Objekt.
Fig. 12 eine schematische Seitenansicht eines Dornschwenkarms;
Fig. 13 schematisch eine erste Anordnung einer Hubkurve zum axialen Bewegen der Transferhalterungen; und
Fig. 14 schematisch eine zweite, bevorzugte Anordnung einer Hubkurve zum axialen Bewegen der Transferhalterungen.

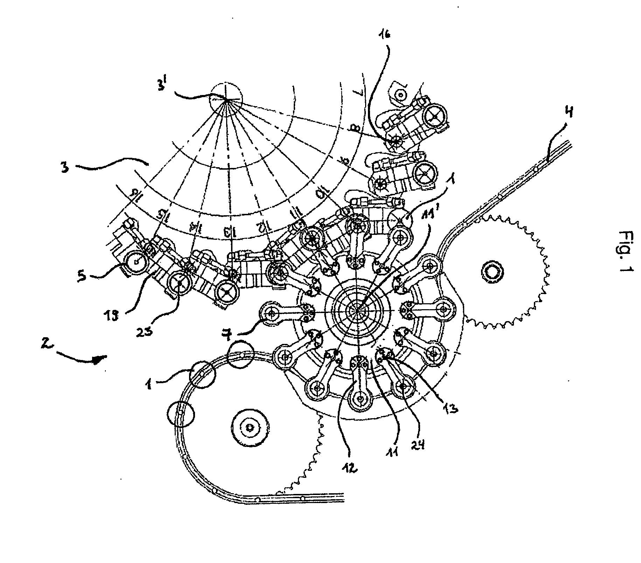

Eine Transfervorrichtung 2 in Fig. 1 umfasst ein Dornrad 3 und ein Transferrad 11 und dient zum Übergeben eines Objekts 1 von dem Dornrad 3 über das Transferrad 11 zu einer Transporteinrichtung 4. Das Dornrad 3 ist um eine Rotationsachse 3', das Transferrad 11 um eine Rotationsachse 11' drehend angetrieben, wobei die Rotationsachsen 3' und 11' zueinander parallel liegen. Im Bereich der Peripherie des Dornrades 3 sind Halterungen in Form von Aufnahmedornen 5, im Bereich der Peripherie des Transferrades 11 Halterungen 7 als Transferhalterungen angeordnet. Die Anzahl der Transferhalterungen 7 am Transferrad, konkret zwölf, ist kleiner als die Anzahl der Aufnahmedorne 5 an dem Dornrad 3, konkret vierundzwanzig, wobei neun Aufnahmedorne 5 am in der Figur dargestellten Ausschnitt des Dornrades 3 erkennbar sind. Die Transferhalterungen 7 sind mit dem Transferrad 11 jeweils über einen Transferschwenkarm 12, die Aufnahmedorne 5 mit dem Dornrad 3 jeweils über einen Dornschwenkarm 19 verbunden. Die Schwenkachsen 13 der Dornschwenkarme 19 verlaufen jeweils parallel zur Rotationsachse 11' des Transferrades 11. Die Schwenkachsen 13 haben für jede der Transferhalterungen 7 denselben, festen Abstand zu der Rotationsachse 11' und sind auf einem Kreis um die Rotationsachse 11' gleichmäßig verteilt. Die Schwenkachsen 16 der Dornschwenkarme 19 verlaufen jeweils parallel zur Rotationsachse 3' des Dornrades 3. Die Schwenkachsen 16, die den jeweiligen Dornschwenkarmen 19 zugeordnet sind, haben denselben, festen Abstand zu der Rotationsachse 3' und sind auf einem Kreis um die Rotationsachse 3' gleichmäßig verteilt. Über einen auf der Schwenkachse 13 befindlichen Drehpunkt des Dornschwenkarmes 12 und eine als Bohrung ausgebildete Öffnung 24 der Transferhalterung 7 wird Druckluft und Vakuum zugeführt. Die Druckluft/Vakuum-Zufuhr für den Aufnahmedorn 5 erfolgt über einen auf der Schwenkachse 16 befindlichen Drehpunkt des Dornschwenkarmes 19 und eine als Bohrung ausgebildete Öffnung 23 des Aufnahmedorns 5.

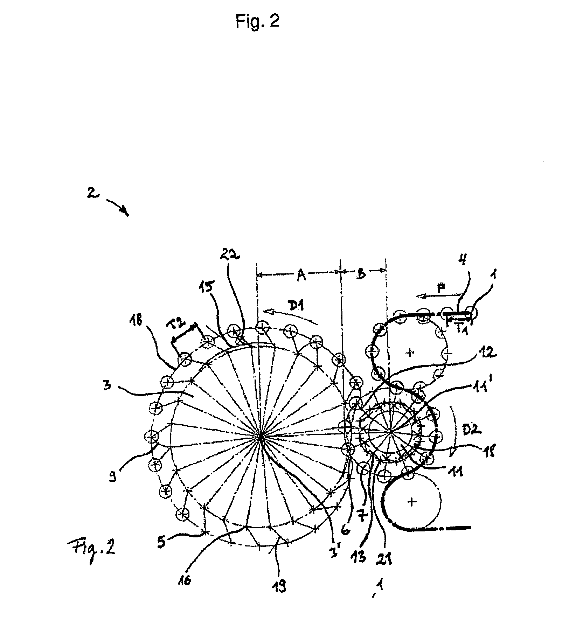

Aus Darstellungsgründen sind die Aufnahmedorne 5 und die Transferhalterungen 7 in den Fig. 2 bis 6 jeweils konzentriert als Kreuz dargestellt.

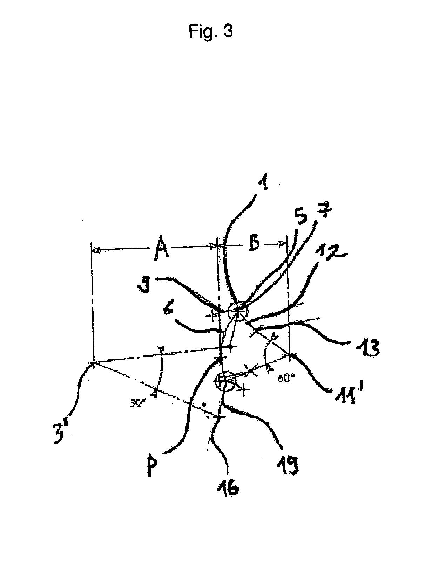

Die in Fig. 2 gezeigte Transfervorrichtung 2 weist die gleichen konstruktiven Merkmale wie die in Fig. 1 gezeigte auf, insofern handelt es sich um das gleiche Ausführungsbeispiel. Es besteht ein funktionaler Unterschied lediglich dahingehend, dass die in Fig. 1 gezeigte Transfervorrichtung 2 zum Übergeben eines Objekts 1 von einem Dornrad 3 an eine Transporteinrichtung 4, die in Fig. 2 gezeigte zum Übergeben eines Objekts 1 von einer Transporteinrichtung 4 an das Dornrad 3 verwendet wird. Die im Folgenden mit Bezug auf Fig. 2 und Fig. 3 beschriebenen kinematischen Zusammenhänge gelten demnach analog für die in Fig. 1 gezeigte Transfervorrichtung 2.

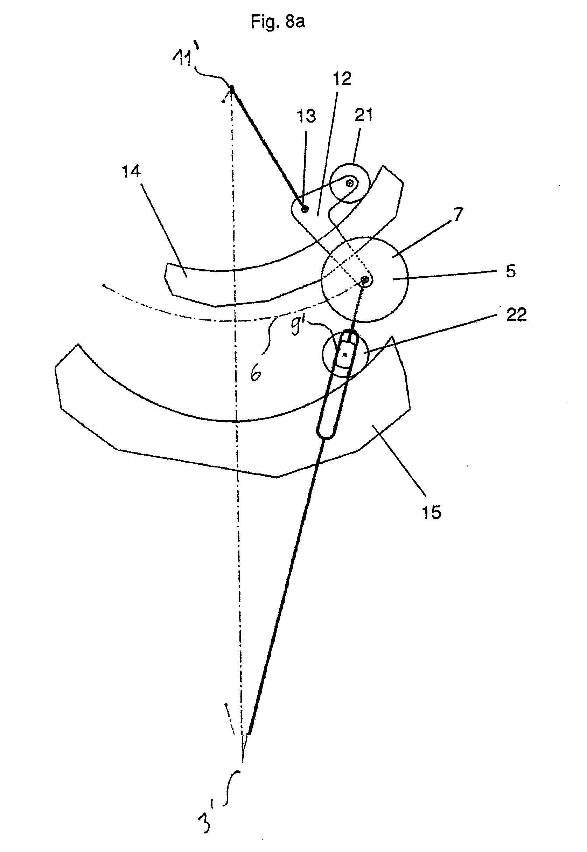

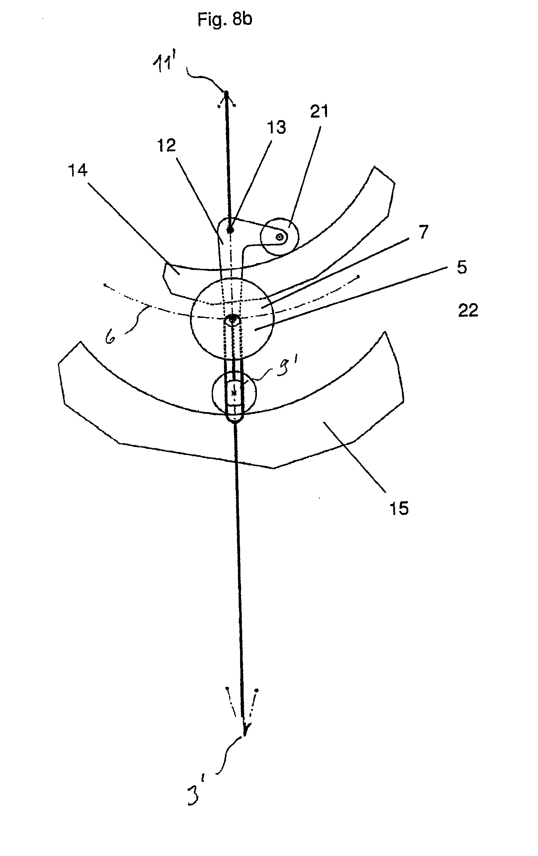

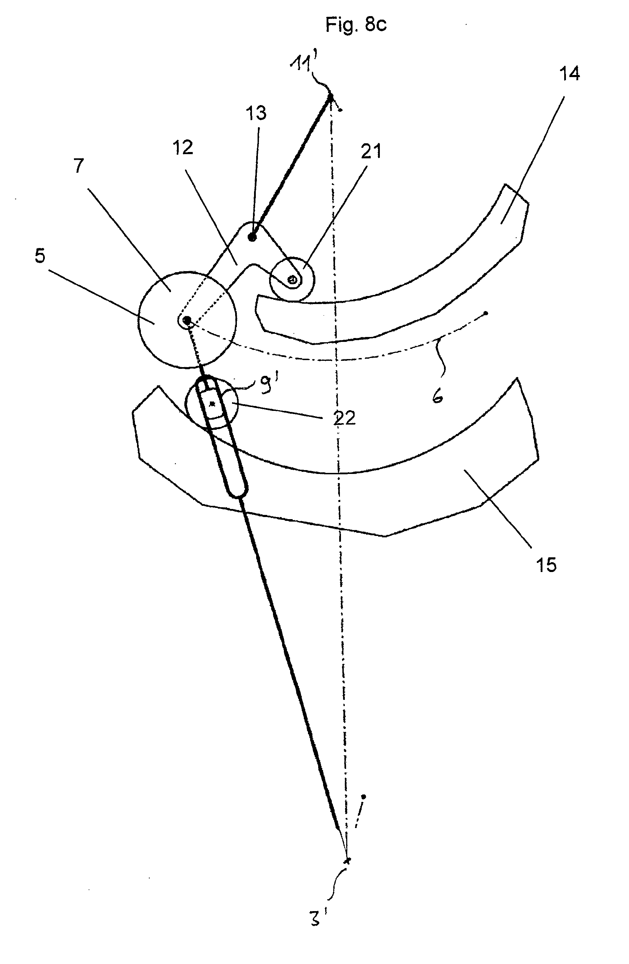

Eine Transfervorrichtung 2 in Fig. 2 umfasst ein Dornrad 3 und ein Transferrad 11. Das Dornrad 3 ist um eine Rotationsachse 3' in einer Drehrichtung D1, das Transferrad 11 um eine Rotationsachse 11' in einer Drehrichtung D2 drehend angetrieben. Die Drehrichtung D1 ist gegensinnig zur Drehrichtung D2. Eine Transporteinrichtung 4, die als Kettenförderer ausgebildet ist, befördert die von ihr mit einer (Abstands-) Teilung T1 aufgenommenen Objekte 1 kontinuierlich mit einer Fördergeschwindigkeit F entlang eines Transferrades 11. Ab dem Punkt, ab dem sich die Transporteinrichtung 4 an das Transferrad 11 anschmiegt, erfolgt ein Ansaugen des jeweiligen Objekts 1 durch eine der Transferhalterungen 7, wobei das dafür erforderlichen Vakuum über die Schwenkachse 13 der Transferhalterung 7 und die in der Transferhalterung 7 vorgesehenen und als Bohrung ausgebildeten Öffnung 24 bereitgestellt wird. Mit Beginn des Ansaugvorgangs wird das zunächst auf einem Haltestab 4' des Kettenförderers 4 vollständig "aufgefädelte" Objekt 1 (gezeigt in Fig. 8) vom Haltestab 4' abzogen. Dazu ist die Transferhalterung 7 entlang einer parallel zu ihrer Schwenkachse 13 verlaufenden Achse beweglich gelagert und wird entsprechend durch ein Schubsteuermittel ausgelenkt (nicht dargestellt). Die für das vollständige Abziehen des Objekts 1 erforderliche Auslenkung der Transferhalterung 7 ist durch die Überlappungslänge von Objekt 1 und Haltestab 4' des Kettenförderers vorgegeben und wird durch das Schubsteuermittel, ausgehend von einer Anfangslage der Transferhalterung 7, im fortschreitendem Umlauf des Objekts 1 um das Transferrades 11, spätestes jedoch mit Erreichen des Endes des Anschmiegebereichs, bewirkt. In der sich anschließenden Transportphase nähert sich ein Objekt 1 einer Übergabestrecke. Diese Übergabestrecke ist durch einen gemeinsamen Bahnkurvenabschnitt 6 definiert, auf der eine Übergabe eines Objekts 1 von einer Transferhalterung 7 auf einen korrespondierenden Aufnahmedorn 5, oder umgekehrt, erfolgt. Die Abstandsnormale der Rotationsachsen 3' und 11' schneidet den gemeinsamen Bahnkurvenabschnitt 6 in einem Punkt P. Die Länge der Abstandnormalen zwischen Punkt P und der Rotationsachse 3' stellt einen Mindestabstand A der Aufnahmedorne 5 von der Rotationsachse 3' des Dornrades 3 dar. Entsprechend ist ein Maximalabstand B der Transferhalterungen 7 von der Rotationsachse 11' des Transferrades 11 durch die Länge der Abstandsnormalen zwischen Punkt P und der Rotationsachse 11' des Transferrades 11 bestimmt. Der Maximalabstand B der Halterungen 7 von der Rotationsachse 11' des Transferrades 11 ist kleiner, als der Mindestabstand A der Aufnahmedorne 5 von der Rotationsachse 3' des Dornrades. Wie bereits mit Bezug auf Fig. 1 erläutert, sind am Umfang des Transferrades 11 zwölf Halterungen 7, am Umfang des Dornrades 3 vierundzwanzig Aufnahmedorne 5 ringförmig angeordnet. Die Größe des durch die Schwenkachsen 13 zweier benachbarter Halterungen 7 mit der Rotationsachse 11' als Scheitelpunkt beschriebenen, eingeschlossenen Transferradwinkels beträgt demnach 30°. Analog beträgt der durch die Schwenkachsen 13 zweier benachbarter Aufnahmedorne 5 mit der Rotationsachse 3' als Scheitelpunkt beschriebene, eingeschlossene Dornradwinkel 15°. Im Bereich der durch den Bahnkurvenabschnitt 6 definierten Übergabestrecke stehen sich demnach jeweils ein konstanter Dornradwinkel von 15° und ein konstanter Transferradwinkel von 30° gegenüber. Damit ergibt sich eine Übersetzung von 1:2. Grundsätzlich können ähnlich aufgebaute Transportvorrichtungen auch andere Übersetzungen realisieren. Ein mit dem Dornrad 3 über einen Dornschwenkarm 19 verbundener Aufnahmedorn 5 ist um seine Schwenkachse 16 entlang einer Kreisführungsbahn 9, eine mit dem Transferrad 11 über einen Transferschwenkarm 12 verbundene Halterung um ihre Schwenkachse 13 beweglich. Durch Überlagerung einer Schwenkbewegung des Aufnahmedorns 5 mit einer Tangentialrelativbewegung der Transferhalterung 7, wird erreicht, dass der Aufnahmedorn 5 und die Transferhalterung 7 den gemeinsamen, kreisbahnförmigen Bahnkurvenabschnitt 6 koaxial gepaart durchlaufen. Ein Teilungsausgleich T1 zu T2 ist damit gewährleistet. Die Tangentialrelativbewegung der Transferhalterung 7 wird dadurch bewirkt, dass dem Transferrad 11 eine erste gestellfeste Steuerkurve 14 zugeordnet und jeder Transferschwenkarm 12 jeweils mit einem Steuerkurvenfolger 21 verbunden ist, der bei Rotation des Transferrades 11 die ersten gestellfesten Steuerkurve 14 abfährt. Die Relativposition der an dem Transferschwenkarm 12 befestigten Transferhalterung 7 ist damit in Anhängigkeit des Drehwinkels des Transferrades 11 fest eingeprägt. Ebenso wird die Schwenkbewegung des Aufnahmedorn dadurch bewirkt, dass dem Dornrad 3 eine zweite gestellfeste Steuerkurve 15 zugeordnet und jeder Dornschwenkarm 19 jeweils mit einem Steuerkurvenfolger 22 verbunden ist, der bei Rotation des Dornrades 3 die zweite gestellfeste Steuerkurve 15 abfährt. Die Relativposition der an dem Dornschwenkarm 19 befestigten Aufnahmedorne 5 ist damit in Abhängigkeit des Drehwinkels des Dornrades 3 fest eingeprägt. Um eine Übergabe eines Objekts 1 von einer Transferhalterung 7 auf einen Aufnahmedorn 5 zu vollziehen wird das Objekt 1 während des Durchlaufens des kreisbahnförmigen Bahnkurvenabschnitt auf den Aufnahmedorn 5 aufgeschoben. Dies wird dadurch bewirkt, dass die Transferhalterung 7, die entlang der parallel zu ihrer Schwenkachse 13 verlaufenden Achse beweglich gelagert ist, durch das Schubsteuermittel aus ihrer Auslenkungslage, die mit Erreichen des Endes des Anschmiegebereichs eingenommen wurde, in eine einem Aufnahmedorn 5 nähere Lage gebracht wird. Ab diesem Zeitpunkt erfolgt ein Abschalten des durch die Öffnung 24 der Transferhalterung 7 bereitgestellten Vakuums und beginnt ein Ansaugen des jeweiligen Objekts 1 durch den Aufnahmedorn 5, wobei das dafür erforderlichen Vakuum über die Schwenkachse 16 des Aufnahmedorns 5 und die in dem Aufnahmedorn vorgesehenen und als Bohrung ausgebildeten Öffnung 23 bereitgestellt wird.

Der mit Bezug auf Fig. 2 beschriebene, durch den gemeinsamen Bahnabschnitt 6 definierte Übergabebereich ist in Fig. 3 in einer Detailansicht dargestellt. Ohne Beschränkung der Allgemeinheit ist aus Darstellungsgründen nur jede zweite Transferhalterung 7 bzw. jeder zweite Aufnahmedorn 5 gezeigt, weshalb der dargestellte Transferradwinkel 60°, der Dornradwinkel 30° beträgt. Ein mit dem Dornrad 3 (repräsentiert durch die Schenkel des Dornradwinkels mit Scheitelpunkt in der Rotationsachse 3') über einen Dornschwenkarm 19 verbundener Aufnahmedorn 5 ist um seine Schwenkachse 16 entlang einer Kreisführungsbahn 9, eine mit dem Transferrad 11 über einen Transferschwenkarm 12 verbundene Halterung um ihre Schwenkachse 13 beweglich. Durch Überlagerung einer Schwenkbewegung des Aufnahmedorns 5 mit einer Tangentialrelativbewegung der Transferhalterung 7, wird erreicht, dass der Aufnahmedorn 5 und die Transferhalterung 7 den gemeinsamen, kreisbahnförmigen Bahnkurvenabschnitt 6 koaxial gepaart durchlaufen.

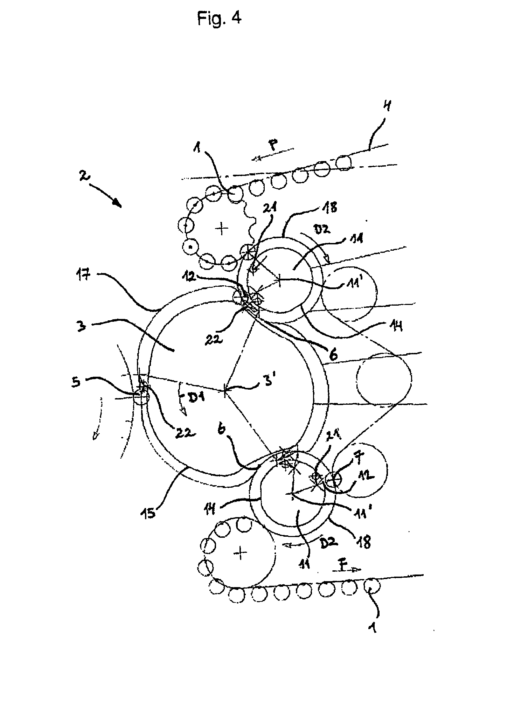

Die in Fig. 4 dargestellte Transfervorrichtung 2 umfasst zwei identische Transferräder 11, eines zum Übergeben eines zu bearbeitenden Objekts 1 von einer Transporteinrichtung 4 zu einem Dornrad 3, ein zweites zum Übergeben des bearbeiteten Objekts 1 von dem Dornrad 3 zu der Transporteinrichtung 4. Es gilt analog die Figurenbeschreibung mit bezug auf Fig. 1 bis 3. Dem Transferrad 11 ist jeweils eine erste gestellfeste Steuerkurve 14 zugeordnet. Die Transferschwenkarme 12 des Transferrades 11 sind jeweils mit einem Steuerkurvenfolger 21 derart verbunden, dass die gestellfeste Steuerkurve 14 und die Steuerkurvenfolger 21 durch die Rotation des Transferrades 11 um seine Rotationsache 11' ein Bewegen der an den Transferschwenkarmen 12 befestigten Halterungen 7 entlang einer um die Rotationsachse 11' geschlossenen Halterungsbahn 18 bewirken. Weiterhin ist dem Dornrad 3 eine zweite gestellfeste Steuerkurve 15 zugeordnet. Jeder Dornschwenkarm 19 des Dornrades 3 ist jeweils mit einem Steuerkurvenfolger 22 derart verbunden, dass die gestellfeste Steuerkurve 15 und die Steuerkurvenfolger 22 durch die Rotation des Dornrades 3 um seine Rotationsache 3' ein Bewegen des an dem jeweiligen Dornschwenkarm 19 befestigten Aufnahmedorns 5 entlang einer um die Rotationsachse 3' geschlossene Aufnahmedornbahn (17) bewirken.

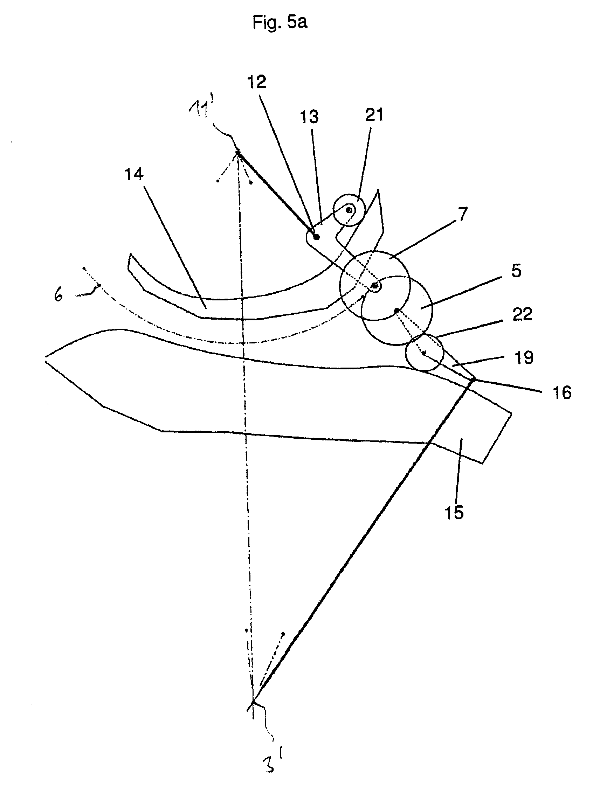

Fig. 5a bis 5d zeigen in drei Momentaufnahmen, wie einerseits der Steuerkurvenfolger 21 auf der gestellfesten Steuerkurve 14 des Tranferrades 11 abrollt und so den Transferschwenkarm 12 im Übergabebereich bewegt und andererseits wie der Steuerkurvenfolger 22 auf der gestellfesten Steuerkurve 15 des Dornrades 3 abrollt und so den entsprechenden Dornschwenkarm 19 im Übergabebereich bewegt. Es sind jeweils nur ein einziger Steuerkurvenfolger und der dazugehörige Schwenkarm dargestellt. Auch die gestellfesten Steuerkurven 14 und 15 sind nur abschnittsweise dargestellt.

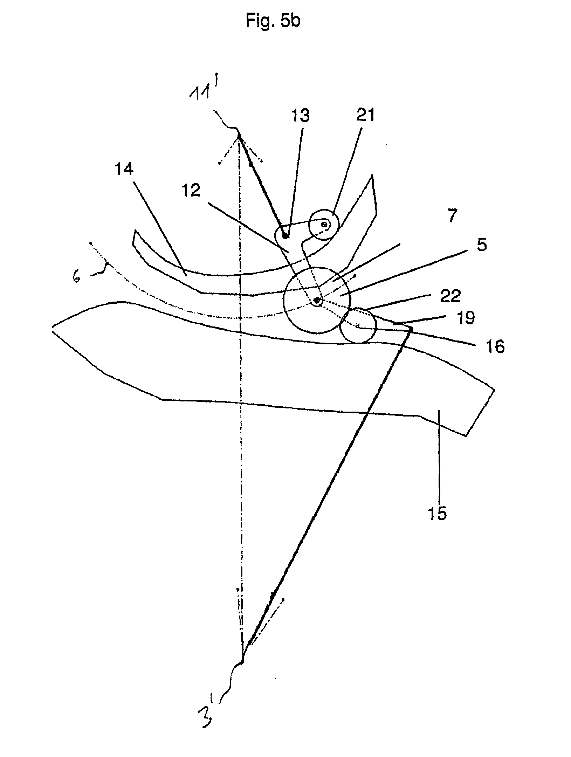

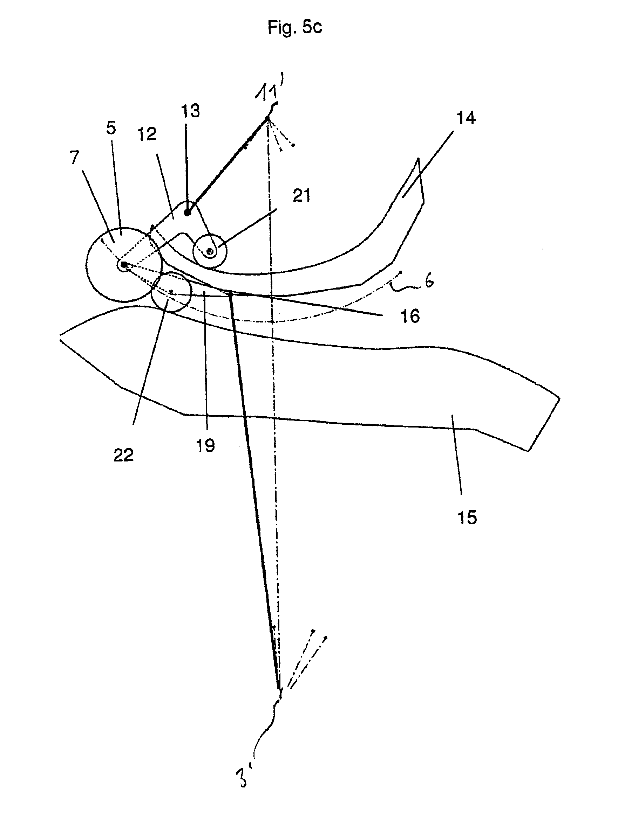

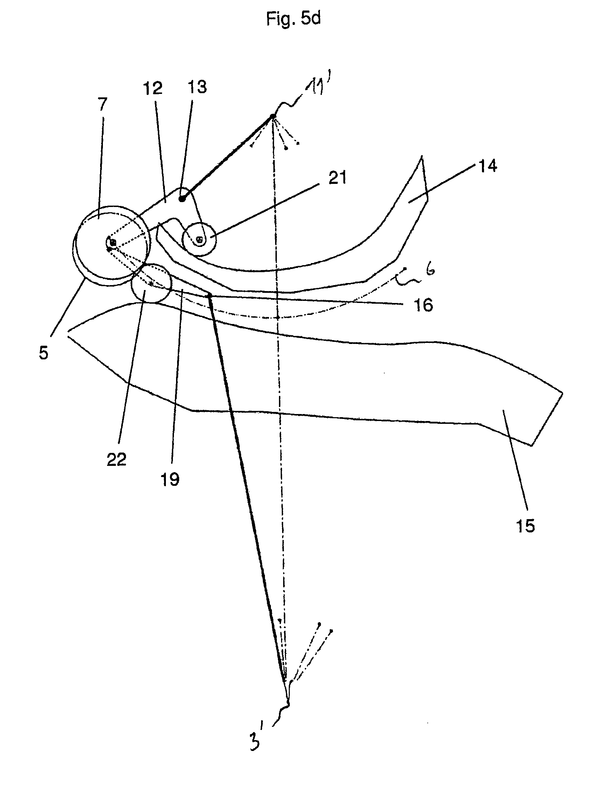

Fig. 5a zeigt, wie die Transferhalterung 7 am Transferschwenkarm 12 zunächst vom Aufnahmedorn 5 am Dornschwenkarm 19 entfernt ist. Fig. 5b zeigt, dass sich die Bahnkurven der Transferhalterung 7 und des Aufnahmedorns 5 im gemeinsamen Bahnabschnitt 6 zwischen dem in Fig. 5b dargestellten Moment und dem in Fig. 5c dargestellten Moment decken. Fig. 5d zeigt schließlich, wie sich die Transferhalterung 7 und der Aufnahmedorn 5 schließlich wieder von einander entfernen.

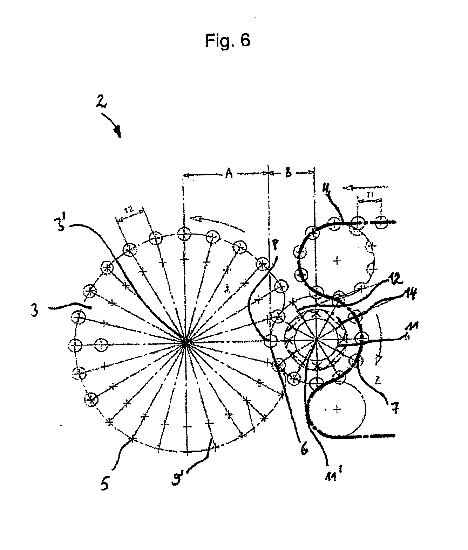

Die in Fig. 6 dargestellte, alternative Ausführungsform einer Transfervorrichtung 2 unterscheidet sich von der in Fig. 2 gezeigten dadurch, dass die Aufnahmedorne 5 jeweils an einer Geradführung 9' befestigt sind. Die Längsachse der jeweiligen Geradführung 9' verläuft quer zur Rotationsachse 3' des Dornrades 3. Die Geradführungen 9' an dem Dornrad 3 erlauben ein Bewegen der an ihnen befestigten Aufnahmedorne 5 zwischen einem Mindestabstand A und einem Maximalabstand zur Rotationsachse 3' entlang einer durch die Geradführung 9' definierten Geradführungsbahn. Die Abstandsnormale der Rotationsachsen 3' und 11' schneidet den gemeinsamen Bahnkurvenabschnitt 6 in einem Punkt P. Die Länge der Abstandnormalen zwischen Punkt P und der Rotationsachse 3' stellt einen Mindestabstand A der Aufnahmedorne 5 von der Rotationsachse 3' des Dornrades 3 dar. Entsprechend ist ein Maximalabstand B der Halterungen 7 von der Rotationsachse 11' des Transferrades 11 durch die Länge der Abstandsnormalen zwischen Punkt P und der Rotationsachse 11' des Transferrades 11 bestimmt. Der Maximalabstand B der Halterungen 7 von der Rotationsachse 11' des Transferrades 11 ist kleiner, als der Mindestabstand A der Aufnahmedorne 5 von der Rotationsachse 3' des Dornrades 3. In dieser alternativen Ausgestaltung ist dem Dornrad 3 eine dritte gestellfeste Steuerkurve zugeordnet (nicht gezeigt). Die Geradführungen 9' des Dornrades 3 sind jeweils mit einem Steuerkurvenfolger derart verbunden, dass die dritte gestellfeste Steuerkurve und die Steuerkurvenfolger durch die Rotation des Dornrades 3 um seine Rotationsachse 3' ein Bewegen der an den Geradführungen 9' befestigten Aufnahmedorne 5' entlang einer um die Rotationsachse 3' geschlossenen Aufnahmedornbahn bewirken. Durch eine Überlagerung einer Geradführungsbewegung des Aufnahmedorns 5 mit einer Tangentialrelativbewegung der Transferhalterung 7, wird erreicht, dass der Aufnahmedorn 5 und die Transferhalterung 7 den gemeinsamen, kreisbahnförmigen Bahnkurvenabschnitt 6 koaxial gepaart durchlaufen. Die Tangentialrelativbewegung der Transferhalterung 7 wird dadurch bewirkt, dass dem Transferrad 11 eine erste gestellfeste Steuerkurve 14 zugeordnet und jeder Transferschwenkarm 12 jeweils mit einem Steuerkurvenfolger 21 verbunden ist, der bei Rotation des Transferrades 11 die ersten gestellfesten Steuerkurve 14 abfährt. Ein Teilungsausgleich T1 zu T2 ist damit gewährleistet.

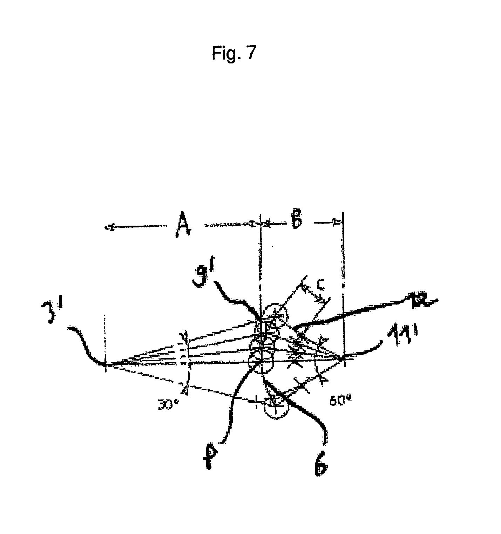

Fig. 7 zeigt ein Detail der beispielhaften Ausführungsform aus Fig. 6 in Hinblick auf eine teilungsausgleichende Schwenkbewegung des Transferschwenkarms 12 und der Gerad-Bewegung der Geradführung 9'. Ohne Beschränkung der Allgemeinheit sind aus Darstellungsgründen Zwischenpositionen der Transferhalterung 7 bzw. des Aufnahmedorns 5 gezeigt. Um einen Vergleich der Kinematik mit der in Fig. 3 zu erleichtern, ist der Transferradwinkel mit 60°, der Dornradwinkel mit 30° dargestellt. Ein mit dem Dornrad 3 (repräsentiert durch die Schenkel des Dornradwinkels mit Scheitelpunkt in der Rotationsachse 3') über eine Geradführung 9' verbundener Aufnahmedorn 5 ist entlang seine Geradführungsbahn (diese verläuft Deckungsgleich zur Geradführung 9'), eine mit dem Transferrad 11 über einen Transferschwenkarm 12 verbundene Halterung um ihre Schwenkachse 13 beweglich. Durch Überlagerung einer Geradführungsbewegung des Aufnahmedorns 5 mit einer Tangentialrelativbewegung der Transferhalterung 7, wird erreicht, dass der Aufnahmedorn 5 und die Transferhalterung 7 den gemeinsamen, kreisbahnförmigen Bahnkurvenabschnitt 6 koaxial gepaart durchlaufen.

Fig. 8a bis 8c zeigen in drei Momentaufnahmen, wie sich bei der in Fig. 6 und 7 dargestellten Ausführungsvariante Aufnahmedorn 5 und Transferhalterung 7 einen gemeinsamen Bahnabschnitt 6 durchlaufen. Insbesondere zeigen Fig. 8a bis 8d Abschnitte der dritten gestellfesten Steuerkurve 15' und dem zugehörigen Steuerkurvenfolger 22', die zusammen die lineare Auslenkung der Aufnahmedorne 5 entlang der jeweiligen Geradführung 9' bewirken. Ähnlich wie in Fig. 5a bis 5d dargestellt, werden gleichzeitig die Positionen der Transferhalterungen 7 durch eine entsprechende erste gestellfeste Steuerkurve 14' und darauf abrollender Steuerkurvenfolger 21 gesteuert, wobei der Steuerkurvenfolger 21 über den jeweiligen Transferschwenkarm 12 mit der entsprechenden Transferhalterung 7 verbunden ist.

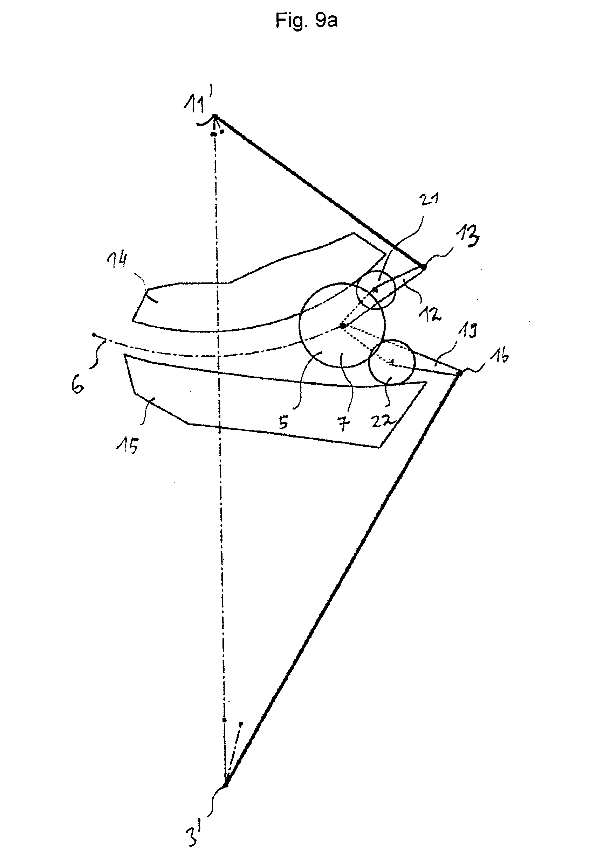

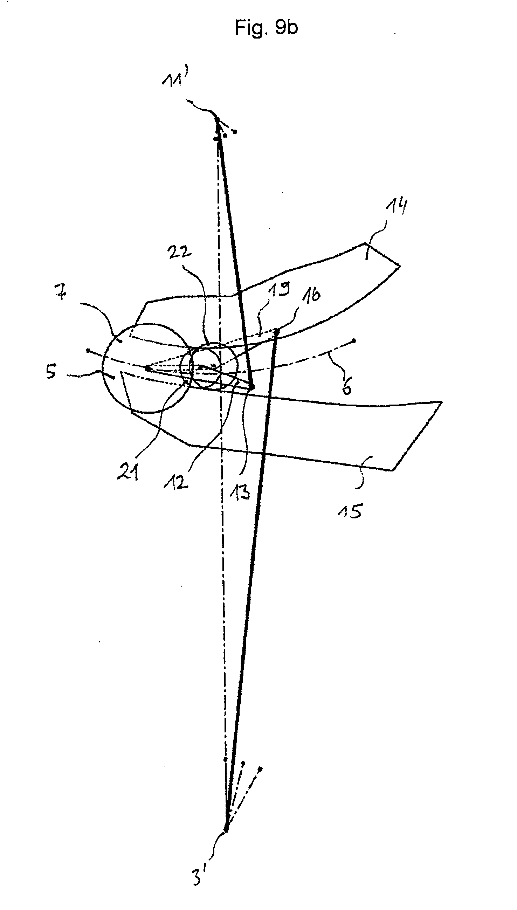

Grundsätzlich sind andere Ausführungsvarianten von Dornrad und Transferrad denkbar, bei denen die jeweiligen Schwenkarme, Steuerkurven und Steuerkurvenfolger anders ausgebildet sind., wobei jeweils zu gewährleisten ist, dass die Transferhalterung 7 und der Aufnahmedorn 5 einen gemeinsamen Bahnabschnitt 6 durchlaufen. Ein Beispiel hierfür ist in Fig. 9a und 9b dargestellt. Bei der Ausführungsvariante der Fig. 9a und 9b sind die Transferhalterung 7 und der Aufnahmedorn 5 - wie bei der mit Bezug auf die Fig. 5a bis 5d beschriebenen Ausführungsvariante - über eine jeweilige Schwenkführung geführt. Die Bezugszeichen gelten entsprechend. Im Unterschied zu der Ausführungsvariante der Fig. 5a bis 5d sind bei der Ausführungsvariante der Fig. 9a und 9b die erste gestellfeste Steuerkurve 14 des Transferrades und die zweite gestellfeste Steuerkurve 15 des Dornrades außenliegend, d.h. die von den jeweiligen Steuerkurvenfolgern 21, 22 abgefahrenen Flächen der beiden Steuerkurven 14, 15 sind einander zugewandt. Um zu gewährleisten, dass die Transferhalterung 7 und der Aufnahmedorn 5 einen gemeinsamen Bahnabschnitt 6 durchlaufen, sind der Transferschwenkarm 12 und der Dornschwenkarm 19 - im Gegensatz zu den in Fig. 5a bis 5d gezeigten Schwenkarmen - gestreckt. Bei den in Fig. 9a und 9b gezeigten Momentaufnahmen überlappen die Transferhalterung 7 und der Aufnahmedorn 5 einander, wobei Fig. 9a einen Moment unmittelbar nach Beginn der Überlappung, Fig. 9b einen Moment vor dem Ende der Überlappung zeigt.

Auch das ist grundsätzlich möglich, dass am Transferrad Geradführungen vorgesehen sind und am Dornrad Schwenkarme.

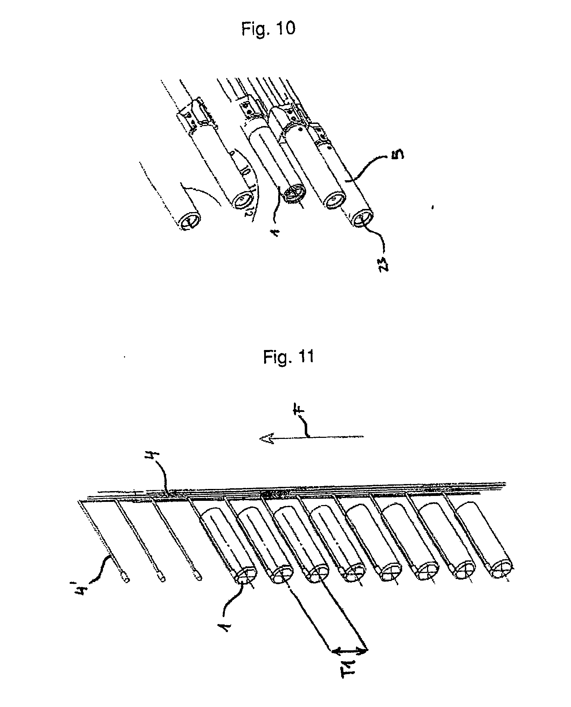

Ein Aufnahmedorn 5 in Fig. 10 weist eine als Bohrung ausgebildete Öffnung 23 auf, die zur Zufuhr von Druckluft/Vakuum ausgebildet ist.

Eine in Fig. 11 dargestellte Transporteinrichtung 4 ist als Kettenförderer ausgebildet und befördert die durch Haltestäbe 4' mit einer Teilung T1 aufgenommenen Objekte 1 mit einer Fördergeschwindigkeit F.

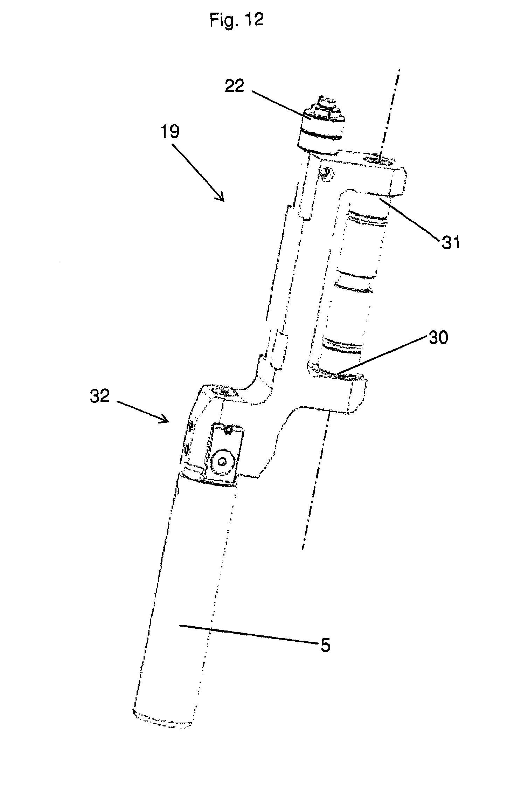

Fig. 12 zeigt schließlich eine schematische Seitenansicht eines Dornschwenkarms 19. Strichpunktiert ist die Schwenkachse eingezeichnet. Zu erkennen ist, dass der Dornschwenkarm 19 zwei im axialen Abschnitt von einander angeordnete Schwenklager 30 und 31 aufweist. Der Dornschwenkarm 19 ist derart geköpft ausgebildet, dass jenes freie Ende 32 des Dornschwenkarms 19, an dem ein jeweiliger Aufnahmedorn angeordnet ist, einen axialen Abstand zum Schwenklager 31 hat. Durch diese geköpfte Anordnung der Dornschwenkarme können die Dornschwenkarme dichter aufeinander folgend über den Umfang des Dornrades 3 verteilt werden, so wie dies in den Fig. 1 und 2 dargestellt ist. Außerdem befindet sich der Steuerkurvenfolger 22 des Dornschwenkarmes 19 auf der gleichen Seite der Schwenkachse, wie jenes freie Ende 32 des Dornschwenkarmes 19, an dem der Aufnahmedorn 5 befestigt ist. Auf diese Weise werden die zwischen Steuerkurvenfolger 22 und Aufnahmedorn 5 herrschenden Momente und damit entsprechende Verformungen des Dornschwenkarmes 19 möglichst gering gehalten.

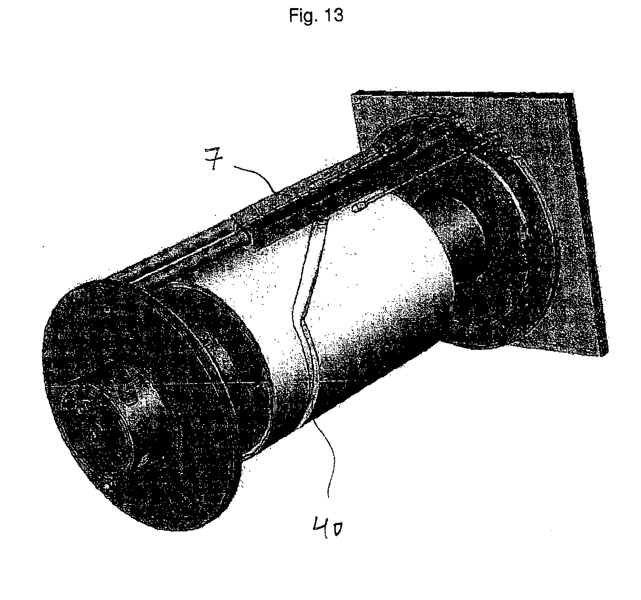

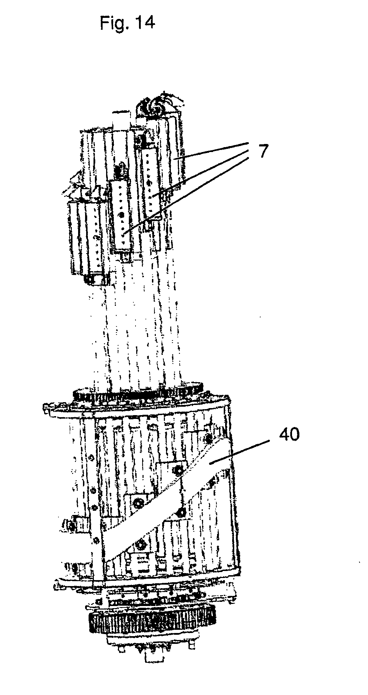

Fig. 13 und 14 erläutern sehr schematisch zwei alternative Anordnungen einer Hubkurve 40, mit der die Transferhalterungen 7 in deren Längsrichtung bewegt werden können, um Körper von einem jeweiligen Aufnahmedorn aufzunehmen beziehungsweise auf einen jeweiligen Aufnahmedorn aufzuschieben.

Fig. 13 zeigt eine Variante, bei der die entsprechende Hubkurve zwischen den Transferhalterungen angeordnet ist. Da die Bahn der Hubkurve bestimmte Steigungen nicht überschreiten darf, hat die Hubkurve notwendigerweise auch einen bestimmten Mindestdurchmesser, wenn sie einen bestimmten Hub bewirken soll. Dies bedingt, dass das Transferrad bei der in Fig. 13 dargestellten Ausführungsvariante im Ergebnis einen relativ großen Durchmesser hat, da die Transferhalterungen außerhalb der Hubkurve 40 angeordnet sind.

Fig. 14 zeigt eine bevorzugte Ausführungsvariante, bei der die Hubkurve nicht zwischen den Transferhalterungen angeordnet ist, sondern in Antriebsrichtung des Transferrades axial zu den Transferhalterungen versetzt angeordnet ist. Auf diese Weise können der Durchmesser des Transferrades und der Durchmesser der zugehörigen Hubkurve zum Anheben und Absenken der Transferhalterungen in dem Transferrad unabhängig von einander gewählt werden.

## Patentansprüche

1. Transfervorrichtung (2) mit einem Dornrad (3) und einem Transferrad (11), die jeweils um zueinander parallele Rotationsachsen (3', 11') drehend angetrieben sind, im Bereich ihrer Peripherie jeweils Halterungen (5, 7) für zu bedruckende oder anderweitig zu bearbeitende Objekte (1) aufweisen, wobei der Abstand der Halterungen (5) an dem Dornrad (3) von der Rotationsachse des Dornrades (3) zwischen einem Mindestabstand (A) und einem Maximalabstand veränderlich ist und Dornrad (3) und Transferrad (11) derart benachbart zueinander angeordnet sind, dass Objekte (1) von einer Transporteinrichtung (4) über das Transferrad (11) an jeweils eine Halterung (5) an dem Dornrad (3) übergeben werden können, oder umgekehrt, vom Dornrad (3) über das Transferrad (11) zu einer Transporteinrichtung (4),
wobei
die Halterungen (7) an dem Transferrad (11) jeweils über einen Transferschwenkarm (12) um eine Schwenkachse (13) schwenkbar befestigt sind, wobei die Schwenkachse (13) parallel zur Rotationsachse (11') des Transferrades (11) verläuft und die Schwenkachse (13) für jede der Halterungen (7) denselben, festen Abstand zu der Rotationsachse (11') hat,
**dadurch gekennzeichnet, dass** die Transfervorrichtung (2) Steuermittel umfasst, die bewirken, dass eine ein Objekt (1) abgebende Halterung (7) an dem Transferrad (11) und eine das Objekt (1) aufnehmende Halterung (5) an dem Dornrad (3) in einem Übergabebereich einen gemeinsamen Bahnkurvenabschnitt (6) bei gleicher Bahngeschwindigkeit durchlaufen, wobei der gemeinsam durchlaufene Bahnkurvenabschnitt (6) kreisbahnförmig oder angenähert kreisbahnförmig ist.

2. Transfervorrichtung nach Anspruch 1, **dadurch gekennzeichnet, dass** ein Maximalabstand (B) der Halterungen (7) von der Rotationsachse (11') des Transferrades (11) kleiner ist, als der Mindestabstand (A) der Halterungen (5) an dem Dornrad (3) von der Rotationsachse (3') des Dornrades (3).

3. Transfervorrichtung gemäß Anspruch 1 oder 2, **dadurch gekennzeichnet, dass** die Anzahl der Halterungen (7) an dem Transferrad (11) kleiner ist, als die Anzahl der Halterungen (5) an dem Dornrad (3).

4. Transfervorrichtung gemäß einem der Ansprüche 1 bis 3, **dadurch gekennzeichnet, dass** die Schwenkachsen (13) des Transferschwenkarmes (12) an dem Transferrad (11) auf einem Kreis um die Rotationsachse (11') des Transferrades (11) gleichmäßig verteilt sind.

5. Transfervorrichtung gemäß einem der Ansprüche 1 bis 4, **dadurch gekennzeichnet, dass** die Halterungen (5) mit dem Dornrad (3) jeweils über einem Dornschwenkarm (19) verbunden sind, dessen Schwenkachse (16) parallel zur Rotationsachse (3') des Dornrades (3) verläuft und die für jede der Halterungen (5) an dem Dornrad (3) denselben, festen Abstand zu dessen Rotationsachse (3') hat, wobei die Dornschwenkarme (19) an dem Dornrad (3) ein Bewegen der an ihnen befestigten Halterungen (5) zwischen deren Mindestabstand (A) und Maximalabstand zur Rotationsachse (3') entlang einer Kreisführungsbahn (9) bewirken/erlauben.

6. Transfervorrichtung gemäß einem der Ansprüche 1 bis 4, **dadurch gekennzeichnet, dass** die Halterungen (5) an dem Dornrad (3) jeweils an einer Geradführung befestigt sind, dessen Längsachse quer zur Rotationsachse (3') des Dornrades (3) verläuft, wobei die Geradführungen an dem Dornrad (3) ein Bewegen der an ihnen befestigten Halterung (5) zwischen deren Mindestabstand (A) und Maximalabstand zur Rotationsachse (3') entlang einer Geradführungsbahn (9') bewirken/erlauben.

7. Transfervorrichtung gemäß einem der Ansprüche 1 bis 6, **dadurch gekennzeichnet, dass** dem Transferrad (11) eine erste gestellfeste Steuerkurve (14) und den Transferschwenkarmen (12) des Transferrades (11) jeweils ein Steuerkurvenfolger (21) derart zugeordnet ist, dass die gestellfeste Steuerkurve (14) und Steuerkurvenfolger (21) durch die Rotation des Transferrades (11) um seine Rotationsache (11') ein Bewegen der an den Transferschwenkarmen (12) befestigten Halterungen (7) entlang einer um die Rotationsachse (11') geschlossenen Halterungsbahn (18) bewirken.

8. Transfervorrichtung gemäß einem der Ansprüche 1 bis 7, **dadurch gekennzeichnet, dass** dem Dornrad (3) eine zweite gestellfeste Steuerkurve (15) und dem Dornschwenkarm (19) des Dornrades (3) jeweils ein Steuerkurvenfolger (22) derart zugeordnet ist, dass gestellfeste Steuerkurve (15) und Steuerkurvenfolger (22) durch die Rotation des Dornrades (3) um seine Rotationsache (3') ein Bewegen des an dem Dornschwenkarm (19) befestigten Halterungen (5) entlang einer um die Rotationsachse (3') geschlossene Aufnahmedornbahn (17) bewirken.

9. Transfervorrichtung gemäß einem der Ansprüche 1 bis 8, **dadurch gekennzeichnet, dass** dem Dornrad (3) eine zweite gestellfeste Steuerkurve (15) und der Geradführung (9') des Dornrades (3) jeweils ein Steuerkurvenfolger (22) derart zugeordnet ist, dass gestellfeste Steuerkurve (15) und Steuerkurvenfolger (22) durch die Rotation des Dornrades (3) um seine Rotationsache (3') ein Bewegen des an der Geradführung (9') befestigten Halterungen (5) entlang einer um die Rotationsachse (3') geschlossenen Aufnahmedornbahn (17) bewirken.

10. Transfervorrichtung gemäß einem der Ansprüche 1 bis 9, **dadurch gekennzeichnet, dass** die Halterungen (7) an dem Transferrad (11) und/oder die Halterungen (5) an dem Dornrad (3) ausgebildet sind, ein Objekt (1) mittels Vakuum anzusaugen und/oder mittels Druckluft abzustoßen.

11. Transfervorrichtung gemäß einem der Ansprüche 1 bis 10, **dadurch gekennzeichnet, dass** die Halterungen (7) an dem Transferrad (11) und/oder die Halterungen (5) an dem Dornrad (3) jeweils eine Öffnung (23, 24) aufweisen, die zur Zufuhr von Druckluft/Vakuum ausgebildet ist.

12. Transfervorrichtung gemäß einem der Ansprüche 1 bis 11, **dadurch gekennzeichnet, dass** eine Druckluft/Vakuum-Zufuhr zu den Halterungen (7) an dem Transferrad (11) und/oder den Halterungen (5) an dem Dornrad (3) jeweils über deren Schwenkachse (13, 16) erfolgt.

13. Transfervorrichtung gemäß einem der Ansprüche 1 bis 12, **dadurch gekennzeichnet, dass** die Halterungen (7) an dem Transferrad (11) jeweils entlang einer parallel zu ihrer Schwenkachse (13) verlaufenden Achse beweglich gelagert sind.

14. Transfervorrichtung gemäß einem der Ansprüche 1 bis 13, **dadurch gekennzeichnet, dass** Schubsteuermittel umfasst sind, die bewirken, dass die Halterungen (7) an dem Transferrad (11) jeweils entlang einer parallel zu ihrer Schwenkachse (13) verlaufenden Achse ausgelenkt werden, wobei der Betrag der Auslenkung von einem Drehwinkel des Transferrades (11) abhängt.

## Claims

1. Transfer device (2) with a mandrel wheel (3) and a transfer wheel (11), which are in each case driven to rotate about mutually parallel rotational axes (3', 11'), have holding devices (5, 7), in each case, in the region of their periphery for objects (1) to be imprinted or otherwise processed, the distance of the holding devices (5) on the mandrel wheel (3) from the rotational axis of the mandrel wheel (3) being variable between a minimum distance (A) and a maximum distance and the mandrel wheel (3) and transfer wheel (11) being arranged adjacent to one another in such a way that objects can be transferred from a transport mechanism (4) by means of the transfer wheel (11) to a respective holding device (5) on the mandrel wheel (3), or vice versa, from the mandrel wheel (3) by means of the transfer wheel (11) to a transport mechanism (4), wherein the holding devices (7) on the transfer wheel (11) are in each case fastened by means of a transfer pivot arm (12) so as to be pivotable about a pivot axis (13), the pivot axis (13) running parallel to the rotational axis (11') of the transfer wheel (11) and the pivot axis (13) for each of the holding devices (7) having the same, rigid distance from the rotational axis (11'), **characterised in that** the transfer device (2) comprises control means, which cause a holding device (7), which delivers an object (1), on the transfer wheel (11) and a holding device (5), which receives the object (1), on the mandrel wheel (3) in a transfer region to run through a common path curve portion (6) at the same path speed, the path curve portion (6), which is jointly run through, having the shape of a circular path or approximately the shape of a circular path.

2. Transfer device according to claim 1, **characterised in that** a maximum distance (B) of the holding devices (7) from the rotational axis (11') of the transfer wheel (11) is smaller than the minimum distance (A) of the holding devices (5) on the mandrel wheel (3) from the rotational axis (3') of the mandrel wheel (3).

3. Transfer device according to claim 1 or 2, **characterised in that** the number of holding devices (7) on the transfer wheel (11) is smaller than the number of holding devices (5) on the mandrel wheel (3).

4. Transfer device according to any one of claims 1 to 3, **characterised in that** the pivot axes (13) of the transfer pivot arm (12) on the transfer wheel (11) are uniformly distributed on a circle about the rotational axis (11') of the transfer wheel (11).

5. Transfer device according to any one of claims 1 to 4, **characterised in that** the holding devices (5) are connected to the mandrel wheel (3) in each case by means of a mandrel pivot arm (19), the pivot axis (16) of which runs parallel to the rotational axis (3') of the mandrel wheel (3) and which, for each of the holding devices (5) on the mandrel wheel (3), has the same, rigid distance from the rotational axis (3') thereof, the mandrel pivot arms (19) on the mandrel wheel (3) bringing about/allowing a movement of the holding devices (5) fastened on them between their minimum distance (A) and maximum distance from the rotational axis (3') along a circular guide path (9).

6. Transfer device according to any one of claims 1 to 4, **characterised in that** the holding devices (5) on the mandrel wheel (3) are fastened in each case on a straight guide, the longitudinal axis of which runs transversely to the rotational axis (3') of the mandrel wheel (3), the straight guides on the mandrel wheel (3) bringing about/allowing a movement of the holding device (5) fastened on them between their minimum distance (A) and maximum distance from the rotational axis (3') along a straight guide path (9').

7. Transfer device according to any one of claims 1 to 6, **characterised in that** a first control curve (14) fixed to the frame is assigned to the transfer wheel (11) and a control curve follower (21) is assigned to the transfer pivot arms (12) of the transfer wheel (11), in each case, in such a way that the control curve (14) fixed to the frame and control curve follower (21), by means of the rotation of the transfer wheel (11) about its rotational axis (11'), bring about a movement of the holding devices (7) fastened to the transfer pivot arms (12) along a holding path (18) closed about the rotational axis (11').

8. Transfer device according to any one of claims 1 to 7, **characterised in that** a second control curve (15) fixed to the frame is assigned to the mandrel wheel (3) and a control curve follower (22) is assigned to the mandrel pivot arm (19) of the mandrel wheel (3), in each case, in such a way that the control curve (15) fixed to the frame and control curve follower (22), by means of the rotation of the mandrel wheel (3) about its rotational axis (3'), bring about a movement of the holding devices (5) fastened to the mandrel pivot arm (19) along a receiving mandrel path (17) closed about the rotational axis (3').

9. Transfer device according to any one of claims 1 to 8, **characterised in that** a second control curve (15) fixed to the frame is assigned to the mandrel wheel (3) and a control curve follower (22) is assigned to the straight guide (9') of the mandrel wheel (3), in each case, in such a way that the control curve (15) fixed to the frame and control curve follower (22), by means of the rotation of the mandrel wheel (3) about its rotational axis (3'), bring about a movement of the holding devices (5) fixed to the straight guide (9') along a receiving mandrel path (17) closed about the rotational axis (3').

10. Transfer device according to any one of claims 1 to 9, **characterised in that** the holding devices (7) on the transfer wheel (11) and/or the holding devices (5) on the mandrel wheel (3) are configured to suck up an object (1) by means of a vacuum and/or to repel it by means of compressed air.

11. Transfer device according to any one of claims 1 to 10, **characterised in that** the holding devices (7) on the transfer wheel (11) and/or the holding devices (5) on the mandrel wheel (3) in each case have an opening (23, 24), which is configured to feed compressed air/a vacuum.

12. Transfer device according to any one of claims 1 to 11, **characterised in that** a compressed air/vacuum feed to the holding devices (7) on the transfer wheel (11) and/or to the holding devices (5) on the mandrel wheel (3) takes place in each case by means of the pivot axis (13, 16) thereof.

13. Transfer device according to any one of claims 1 to 12, **characterised in that** the holding devices (7) on the transfer wheel (11) are in each case movably mounted along an axis running parallel to their pivot axis (13).

14. Transfer device according to any one of claims 1 to 13, **characterised in that** thrust control means are comprised, which cause the holding devices (7) on the transfer wheel (11) to in each case be deflected along an axis running parallel to their pivot axis (13), the amount of the deflection depending on a rotation angle of the transfer wheel (11).

## Revendications

1. Dispositif (2) de transfert comprenant une roue (3) à broches et une roue (11) de transfert, qui sont entraînées en rotation respectivement autour d'axes (3', 11') de rotation parallèles entre eux, qui ont, dans la région de leur périphérie, respectivement des fixations (5, 7) d'objets (1) à imprimer ou à traiter d'une autre façon, la distance des fixations (5) sur la roue (3) à broches à l'axe de rotation de la roue (3) à broches étant variable entre une distance (A) minimum et une distance maximum et la roue (3) à broches et la roue (11) de transfert sont disposées en étant voisines l'une de l'autre, de manière à pouvoir faire passer des objets (1) d'un dispositif (4) de transfert, en passant par la roue (11) de transfert, sur respectivement une fixation (5) sur la roue (3) à broches ou inversement de la roue (3) à broches à un dispositif (4) de transport en passant par la roue (11) de transfert,
dans lequel
les fixations (7) sur la roue (11) de transfert sont fixées respectivement par un bras (12) de pivotement de transfert, de manière à pouvoir pivoter autour d'un axe (13) de pivotement, l'axe (13) de pivotement s'étendant parallèlement à l'axe (11') de rotation de la roue (11) de transfert et l'axe (13) de pivotement ayant, pour chacune des fixations (7), la même distance fixe à l'axe (11') de rotation,
**caractérisé en ce que** le dispositif (2) de transfert comprend des moyens de commande, qui font qu'une fixation (7), cédant un objet (1) sur la roue (11) de transfert et une fixation (5) recevant l'objet (1) sur la roue (3) à broches, parcourent, dans une région de remise, un tronçon (6) courbe de trajectoire commun, à une même vitesse de trajectoire, le tronçon (6) courbe commun de trajectoire parcouru étant en forme de trajectoire circulaire ou à peu près en forme de trajectoire circulaire.

2. Dispositif de transfert suivant la revendication 1, **caractérisé en ce qu'**une distance (B) maximum des fixations (7) à l'axe (11') de rotation de la roue (11) de transfert est plus petite que la distance (A) minimum des fixations (5) sur la roue (3) à broches à l'axe (3') de rotation de la roue (3) à broches.

3. Dispositif de transfert suivant la revendication 1 ou 2, **caractérisé en ce que** le nombre des fixations (7) sur la roue (11) de transfert est plus petit que le nombre des fixations (5) sur la roue (3) à broches.

4. Dispositif de transfert suivant l'une des revendications 1 à 3, **caractérisé en ce que** les axes (13) de pivotement du bras (12) de pivotement de transfert sur la roue (11) de transfert sont répartis uniformément sur un cercle autour de l'axe (11') de rotation de la roue (11) de transfert.

5. Dispositif de transfert suivant l'une des revendications 1 à 4, **caractérisé en ce que** les fixations (5) sont reliées à la roue (3) à broches respectivement par un bras (19) de pivotement de broche, dont l'axe (16) de pivotement s'étend parallèlement à l'axe (3') de rotation de la roue (3) à broches et qui, pour chacune des fixations (5) sur la roue (3) à broches, a la même distance fixe à son axe (3') de rotation, les bras (19) de pivotement de broche sur la roue (3) à broches provoquant / permettant un mouvement des fixations (5), qui y sont fixées, entre leur distance (A) minimum et la distance maximum à l'axe (3') de rotation le long d'une trajectoire (9) de guidage circulaire.

6. Dispositif de transfert suivant l'une des revendications 1 à 4, **caractérisé en ce que** les fixations (5) sur la roue (3) à broches sont fixées respectivement à un guidage rectiligne, dont l'axe longitudinal s'étend transversalement à l'axe (3') de rotation de la roue (3) à broches, les guidages rectilignes sur la roue (3) à broches provoquant / permettant un mouvement de la fixation (5), qui y est fixée, entre sa distance (A) minimum et la distance maximum à l'axe (3') de rotation le long d'une trajectoire (9') de guidage rectiligne.

7. Dispositif de transfert suivant l'une des revendications 1 à 6, **caractérisé en ce qu'**à la roue (11) de transfert, est associée une première came (14) de commande fixée au bâti et, au bras (12) de pivotement de transfert de la roue (11) de transfert, respectivement un suiveur (21) de came de commande, de manière à ce que la came (14) de commande fixée au bâti et le suiveur (21) de came de commande provoquent, par la rotation de la roue (11) de transfert autour de son axe (11') de rotation, un déplacement des fixations (7) fixées au bras (12) de pivotement de transfert, le long d'une trajectoire (18) de fixation fermée autour de l'axe (11') de rotation.

8. Dispositif de transfert suivant l'une des revendications 1 à 7, **caractérisé en ce qu'**à la roue (3) à broches, est associée une deuxième came (15) de commande fixée au bâti et, au bras (19) de pivotement de broche de la roue (3) à broches, respectivement un suiveur (22) de came de commande, de manière à ce que la came (15) de commande fixée au bâti et le suiveur (22) de came de commande provoquent, par la rotation de la roue (3) à broches autour de son axe (3') de rotation, un déplacement de la fixation (5) fixée au bras (19) de pivotement de broche, le long d'une trajectoire (17) de broches de réception fermée autour de l'axe (3') de rotation.

9. Dispositif de transfert suivant l'une des revendications 1 à 8, **caractérisé en ce qu'**à la roue (3) à broches, est associée une deuxième came (15) de commande fixée au bâti, et au guidage (9') rectiligne de la roue (3) à broches, respectivement un suiveur (22) de came de commande, de manière à ce que la came (15) de commande fixée au bâti et le suiveur (22) de came de commande provoquent, par la rotation de la roue (3) à broches autour de son axe (3') de rotation, un déplacement de la fixation (5) fixée au guidage (9') rectiligne, le long d'une trajectoire (17) de broches de réception fermée autour de l'axe (3') de rotation.

10. Dispositif de transfert suivant l'une des revendications 1 à 9, **caractérisé en ce que** les fixations (7) sur la roue (11) de transfert et/ou les fixations (5) sur la roue (3) à broches sont constituées de manière à aspirer un objet (1) au moyen du vide et/ou à le repousser au moyen d'air comprimé.

11. Dispositif de transfert suivant l'une des revendications 1 à 10, **caractérisé en ce que** les fixations (7) sur la roue (11) de transfert et/ou les fixations (5) sur la roue (3) à broches ont respectivement une ouverture (23, 24), qui est constituée pour l'application d'air comprimé / du vide.

12. Dispositif de transfert suivant l'une des revendications 1 à 11, **caractérisé en ce qu'**une application d'air comprimé / de vide aux fixations (7) sur la roue (11) de transfert et/ou aux fixations (5) sur la roue (3) à broches s'effectue respectivement par leur axe (13, 16) de pivotement.

13. Dispositif de transfert suivant l'une des revendications 1 à 12, **caractérisé en ce que** les fixations (7) sur la roue (11) de transfert sont montées mobiles respectivement le long d'un axe s'étendant parallèlement à leur axe (13) de pivotement.

14. Dispositif de transfert suivant l'une des revendications 1 à 13, **caractérisé en ce qu'**il y a des moyens de commande de poussée, qui font que les fixations (7) sur la roue (11) de transfert sont déviées respectivement le long d'un axe s'étendant parallèlement à leur axe (13) de pivotement, le montant de la déviation dépendant d'un angle de rotation de la roue (11) de transfert.
